# FASCICULE DE BREVET EUROPEEN

(11) **EP 3 128 300 B1**
(45) Date de publication et mention de la délivrance du brevet: **26.07.2023**
(21) Numéro de dépôt: 16182423.0
(22) Date de dépôt: 02.08.2016
(51) Int. Cl.: G01J 1/04, G01J 1/02, G01J 1/42

(54) **SYSTEME DE RELEVE DE DONNEES PHOTOMETRIQUES A REPETABILITE AMELIOREE**
SYSTEM ZUR ERHEBUNG VON FOTOMETRISCHEN DATEN MIT VERBESSERTER WIEDERHOLBARKEIT
SYSTEM FOR READING PHOTOMETRIC DATA WITH IMPROVED REPEATABILITY

(30) Priorité: 03.08.2015 FR 1557476
(43) Date de publication de la demande: 08.02.2017
(73) Titulaire: Bouygues Energies et Services, 78180 Montigny le Bretonneux (FR)
(72) Inventeur: DAEL, Clémence, 78000 VERSAILLES (FR); HORTON, Franck, 77850 Héricy (FR); LEBRET, Jean, 77210 AVON (FR)
(74) Mandataire: Regimbeau

(56) Documents cités:
- CN-A- 103 616 161
- FR-A1- 2 976 662
- US-A1- 2009 009 501
- Sumeet Kumar ET AL: "Mobile Sensor Systems for Field Estimation and "Hot Spot" Identification", Mechanical Engineering Massachusetts Institute of Technology, 1 janvier 2014 (2014-01-01), XP055278835, Extrait de l'Internet: URL:http://dspace.mit.edu/handle/1721.1/87 977#files-area [extrait le 2016-06-08]
- Afeisa - Afei Stemas Y Automatización S A: "Luxemetre LX-GPS", , 1 May 2011 (2011-05-01), XP055790030, Retrieved from the Internet: URL:http://www.luxeco.fr/cariboost_files/M ANUEL_20SONDES_20LX_20GPS.pdf [retrieved on 2021-03-25]

## Description

### DOMAINE DE L'INVENTION

L'invention concerne un système de relevé de données photométriques. L'invention s'applique en particulier à la vérification du respect, par une installation d'éclairage public, de normes en vigueur dans ce domaine, en évaluant l'éclairement fourni par cette installation.

### ETAT DE LA TECHNIQUE

Des normes existent prescrivant des valeurs d'éclairement d'une chaussée par un éclairage public, que ce soit en milieu urbain ou rural. C'est par exemple le cas de la norme européenne EN 13201-2.

Pour effectuer le diagnostic photométrique d'une installation d'éclairage urbain, afin de vérifier que l'éclairage de la chaussée permis par cette installation satisfait aux exigences des normes en vigueur, il est connu d'utiliser des systèmes de relevé de données photométriques.

Ces systèmes comportent classiquement des capteurs d'éclairement tels que des luxmètres, qui sont déplacés dans une zone à diagnostiquer, et effectuent lors de ce déplacement des séries de mesures d'éclairement en différents points.

Pour déplacer les capteurs sur toute la zone à diagnostiquer, on utilise des véhicules dédiés sur lesquels les capteurs sont montés, par exemple par l'intermédiaire d'un châssis fixé au véhicule.

Pour respecter les normes en vigueur, et notamment la norme EN13201-2, chaque mesure d'éclairement au niveau d'une section de voie routière doit être réalisée simultanément par trois luxmètres disposés en différentes positions transversalement à la direction de la voie. Ceci permet d'obtenir une information fiable sur toute la largeur de la voie. En particulier, une mesure doit être effectuée par un luxmètre au milieu de la voie et deux autres par des luxmètres déportés latéralement par rapport au luxmètre central.

Les luxmètres sont habituellement positionnés directement sur le capot du véhicule. Leur position dépend donc du technicien qui les met en place. De ce fait leur horizontalité n'est pas garantie. Leur position GPS n'est pas non plus exactement mesurée puisque les cotes relatives entre les luxmètres, ainsi que les mesures des emplacements géographiques (avec l'odomètre de la voiture) ne sont pas constantes d'une installation à l'autre.

Les luxmètres doivent donc être positionnés sur un châssis rigide garantissant une position fixe des luxmètres les uns par rapport aux autres, ainsi que par rapport aux mesures des emplacements géographiques. Le châssis rigide doit de plus être suffisamment large pour pouvoir porter les luxmètres aux positions préconisées de mesure.

Pour ce faire, le châssis est classiquement un barreau dont la longueur est de l'ordre de celle d'une voiture, et qui est fixé sur une voiture, par exemple sur le capot avant ou sous le bas de caisse arrière.

Le fait d'utiliser nécessairement une voiture pour déplacer le système de mesure interdit d'utiliser le système de mesure pour effectuer un diagnostic photométrique de voies non routières telles que par exemple des pistes cyclables ou des voies piétonnes.

Par ailleurs, les données d'éclairement recueillies par les capteurs sont ensuite exploitées pour former des cartographies d'éclairement de la zone à diagnostiquer. Pour cela, il est nécessaire de pouvoir mettre en correspondance les données des capteurs avec les emplacements géographiques correspondants.

A cet égard, les véhicules sont modifiés pour pouvoir connecter une électronique de traitement du système de relevé de données à un odomètre intégré dans le véhicule. Ainsi, le système de relevés de données peut combiner les mesures de l'odomètre avec les mesures des capteurs d'éclairement pour obtenir un emplacement géographique correspondant aux mesures d'éclairement.

Il en résulte que les véhicules utilisés pour déplacer le système de mesure photométrique sont des véhicules dédiés à cet usage. De ce fait, le potentiel d'utilisation du système de mesure photométrique est limité par les disponibilités du véhicule. Il est aussi demandé au technicien de suivre un parcours prédéfini pour attribuer les mesures à un tronçon de voiries. De plus il est nécessaire de faire appel à un technicien qualifié, en plus du conducteur du véhicule, pour synchroniser les données de l'odomètre avec les données des capteurs, ce qui engendre un surcoût de la mise en oeuvre des mesures photométriques ; en effet, les mesures de photométries (et autres) sont localisées en fonction de la rue indiquée dans le logiciel, plutôt qu'à l'aide d'un capteur fournissant les emplacements géographiques. C'est ce deuxième technicien qui a pour mission de déclencher la mesure à chaque début de tronçon et de l'arrêter à chaque fin de tronçon.

Le document « Mobile sensor systems for field estimation and « hot spot » identification », S. Kumar, PhD Thesis, 2014, décrit un système de relevé de données photométriques comprenant un capteur d'éclairement et un GPS, pouvant être fixés sur une plaque montée sur un véhicule.

Le document Afeisa - Afei Stemas Y Automatizacion S A : « Luxemetre LX-GPS », 1^{er} mai 2011, décrit un système de relevé de données photométriques comprenant un capteur d'éclairement et un GPS, pouvant être fixé à une barre porte bagages d'un véhicule.

### DESCRIPTION DE L'INVENTION

L'invention a pour but de proposer un système de relevé de données photométriques ne présentant pas les inconvénients de l'art antérieur indiqués ci-avant.

En particulier, un but de l'invention est de présenter un système de relevé de données permettant des mesures fiables et reproductibles de l'éclairement d'un éclairage urbain.

Un autre but de l'invention est de simplifier le relevé des données photométriques, notamment en ne nécessitant de faire appel qu'à un seul technicien ; ce technicien nécessitant uniquement la compétence de conduire le véhicule.

Encore un autre but de l'invention est de présenter un système autonome pouvant être monté sur des véhicules de type voiture, ou encore quad ou vélo triporteur, permettant la mise en oeuvre de mesures non seulement sur des voies routières, mais également sur des pistes cyclables ou voies piétonnes.

A cet égard, l'invention a pour objet un système de relevé de données photométriques, comprenant :
- un châssis, adapté pour être monté de façon amovible sur un véhicule, et
- un module électronique de mesure, comprenant un ensemble de capteurs, ledit ensemble comportant des capteurs d'éclairement,

le module électronique de mesure comprenant en outre un système de géopositionnement, et le châssis comportant des emplacements dédiés pour la fixation du système de géopositionnement et des capteurs, de sorte que les positions relatives des capteurs et du système de géopositionnement soient déterminées,
caractérisé en ce que le châssis comporte un cadre, comprenant au moins un système de fixation amovible au véhicule, et au moins deux bras de support de capteur, lesdits au moins deux bras de support pouvant adopter une position déployée dans laquelle ils s'étendent en saillie du cadre, et étant escamotables à partir de ladite position déployée, chaque bras de support présentant à son extrémité au moins un emplacement de réception d'une terminaison sensible d'un capteur d'éclairement permettant de déporter au moins deux capteurs d'éclairement (21) de part et d'autre du châssis (10).

Avantageusement, mais facultativement, le système selon l'invention peut en outre comprendre au moins l'une des caractéristiques suivantes :
- le cadre du châssis peut présenter une forme rectangulaire, et chaque bras s'étendre, en position déployée, dans le prolongement d'un premier bord latéral du cadre, et, en position escamotée, le long d'un bord latéral adjacent au premier bord.
- les capteurs d'éclairement peuvent comprendre au moins trois luxmètres, chaque luxmètre comprenant une terminaison sensible, et chaque bras de support du châssis peut comprendre à son extrémité un logement adapté pour recevoir la terminaison sensible d'un luxmètre, le troisième luxmètre étant rapporté sur le châssis, à égale distance des extrémités des bras.
- le module électronique de mesure peut en outre comporter une unité de traitement comprenant :
   ∘ un processeur,
   ∘ une source d'énergie,
   ∘ une interface de communication avec des capteurs, et
   ∘ une interface homme-machine.
- chaque bras de support peut en outre comprendre au moins une rainure adaptée pour recevoir un câble de connexion, la rainure s'étendant de l'extrémité du bras au cadre pour relier la terminaison sensible d'un capteur à l'unité de traitement.
- l'interface de communication avec des capteurs est adaptée pour communiquer avec au moins un capteur parmi le groupe suivant :
   ∘ capteur d'humidité,
   ∘ thermomètre,
   ∘ capteur de composition de l'air,
   ∘ capteur optique.
- le module électronique de mesure peut en outre comprendre une caméra.
- Le système peut en outre comprendre un système de stockage comprenant une valise adaptée pour recevoir l'unité de traitement, et une valise adaptée pour recevoir le châssis et les capteurs du module électronique de mesure.

Le système proposé comprend un châssis comprenant des emplacements dédiés pour la fixation de capteurs d'éclairement et d'un système de positionnement par satellite.

Il est donc possible de déterminer les positions géographiques correspondant aux mesures d'éclairement de manière automatique, puisque les positions relatives des capteurs d'éclairement et du système de positionnement sont connues. Il n'est donc plus nécessaire de faire appel à un technicien dédié, ni de spécialiser le véhicule porteur en établissant une connexion entre un odomètre du véhicule et les capteurs d'éclairement.

De plus, le système proposé présente un châssis pouvant être fixé de manière amovible à un véhicule. Ceci permet au véhicule de ne pas être spécifiquement dédié à la tâche de diagnostic photométrique.

En outre, le support de capteur escamotable du châssis permet à celui-ci d'adopter une configuration déployée, qui est suffisamment large pour pouvoir réaliser des mesures sur toute la largeur d'une chaussée, comme prescrit par la norme EN 13201-2, tout en réduisant la largeur du cadre du châssis, qui est quant à elle fixée sur un véhicule porteur.

Ainsi le véhicule porteur n'est plus nécessairement une voiture, mais peut être un vélo triporteur ou un quad, ce qui permet d'accéder à des voies piétonnes ou des pistes cyclables pour réaliser des mesures photométriques également dans ces endroits.

Les dimensions des bras, aux extrémités desquels peuvent être montés les capteurs d'éclairement, fixent les positions relatives des capteurs. De ce fait, les mesures réalisées par les capteurs sont répétables malgré le caractère modulaire du châssis et le fait qu'il puisse être monté sur différents types de véhicules.

Le système est autonome, transportable, et peut donc être déployé à volonté sur une large variété de véhicules, rendant son utilisation plus simple.

Le système comporte des mécanismes de fixation capables de s'adapter à la forme du véhicule sur lequel il est installé, tout en garantissant sa stabilité pendant les mesures.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1a, 1b et 1c représentent schématiquement en vue de dessus, de face et de côté un système de relevé de données photométriques selon un mode de réalisation de l'invention
- La figure 2 représente schématiquement le stockage pour le transport d'un système de relevé de données,
- La figure 3 représente un exemple d'installation d'un système de relevé de données pour réaliser une campagne de mesures.

### DESCRIPTION DETAILLEE D'AU MOINS UN MODE DE REALISATION DE L'INVENTION

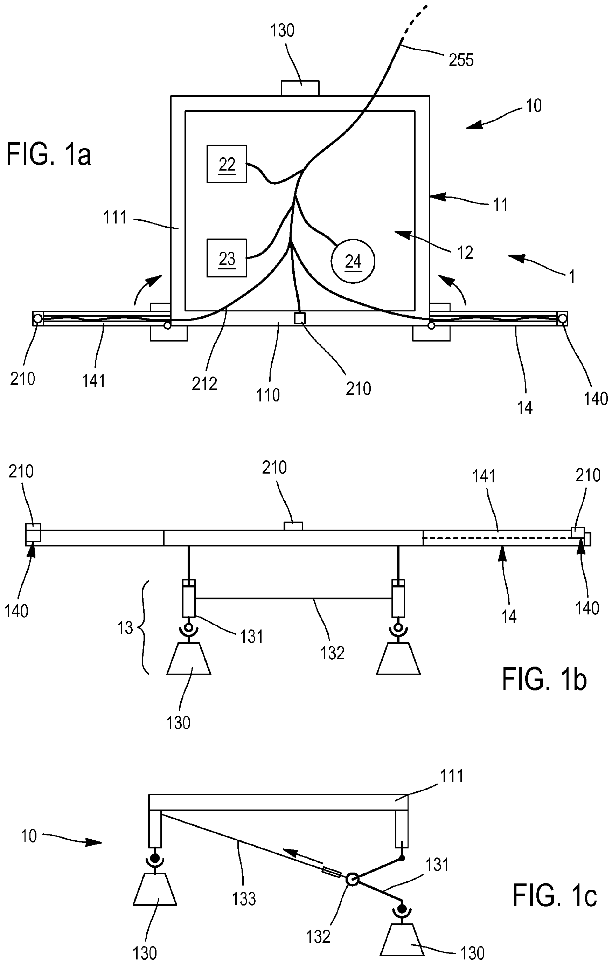

En référence à la figure 1, on a représenté schématiquement un système 1 de relevé de données photométriques.

Ce système 1 comprend un châssis 10, qui est adapté pour pouvoir être monté de façon amovible sur un véhicule. A cet égard, le châssis 10 comporte un système de fixation amovible 13 au véhicule. Ce système 13 comprend de préférence une pluralité de ventouses 130 fixées en différents points du châssis. Les ventouses permettent de plaquer le châssis 10 à un véhicule, puis de l'en désolidariser.

Sur l'exemple représenté sur la figure 1, le châssis 10 comprend un cadre 11 de forme rectangulaire ou carrée. Les ventouses 130 du système de fixation amovible sont dans ce cas avantageusement disposées aux quatre coins du cadre, ce qui permet de fixer le châssis de façon stable au véhicule.

Selon une variante préférée, pour permettre une fixation isostatique du véhicule trois ventouses 130 sont utilisées, deux positionnées aux deux coins d'un côté du châssis 10 et l'autre positionnée au milieu du côté opposé. Par exemple le côté des deux ventouses est celui disposé vers l'avant du véhicule.

Avantageusement, chaque ventouse 130 est reliée au cadre du châssis par un connecteur 131 permettant de faire varier une inclinaison de la ventouse 130 ainsi que sa distance par rapport au cadre 11. Le connecteur 131 est par exemple un bras escamotable, pourvu à son extrémité reliée à la ventouse d'une liaison rotule.

De ce fait le système 1 peut être monté sur n'importe quel type de véhicule, puisque le système de fixation amovible 13 peut s'adapter à la forme du véhicule, pour que le châssis 10 s'étende dans un plan horizontal une fois installé.

Selon une variante de réalisation visible sur les figures 1b et 1c, les connecteurs 131 de deux ventouses 130 adjacentes sont reliés deux à deux par un bras rigide 132 pour rendre solidaire en translation les ventouses correspondantes 130. De ce fait, deux ventouses se trouvent à une distance identique du cadre 11 du châssis 10. La solidarisation de ces 2 bras garanti la stabilité horizontale du système pendant la campagne de mesure.

Comme les véhicules présentent la plupart du temps une symétrie par rapport à un axe longitudinal du véhicule, on peut donc positionner le châssis au milieu du véhicule par rapport à l'axe longitudinal et régler uniquement les hauteurs des deux groupes de ventouses pour que le châssis soit horizontal.

Un système de verrouillage vient compléter ces systèmes de ventouse afin de garantir la stabilité du système pendant la campagne de mesure. Ce système de verrouillage peut avantageusement comprendre des sangles raccordées d'une part au châssis et d'autre part au véhicule afin de maintenir le châssis en position.

Le système de verrouillage peut également comprendre une barre 133 de stabilisation de longueur variable, s'étendant de la barre 132 reliant les connecteurs à un côté du châssis opposé à celui en regard duquel s'étend la barre 132. La longueur de la barre 133 est ajustée afin de la mettre en tension entre le châssis et la barre 132 pour stabiliser l'ensemble.

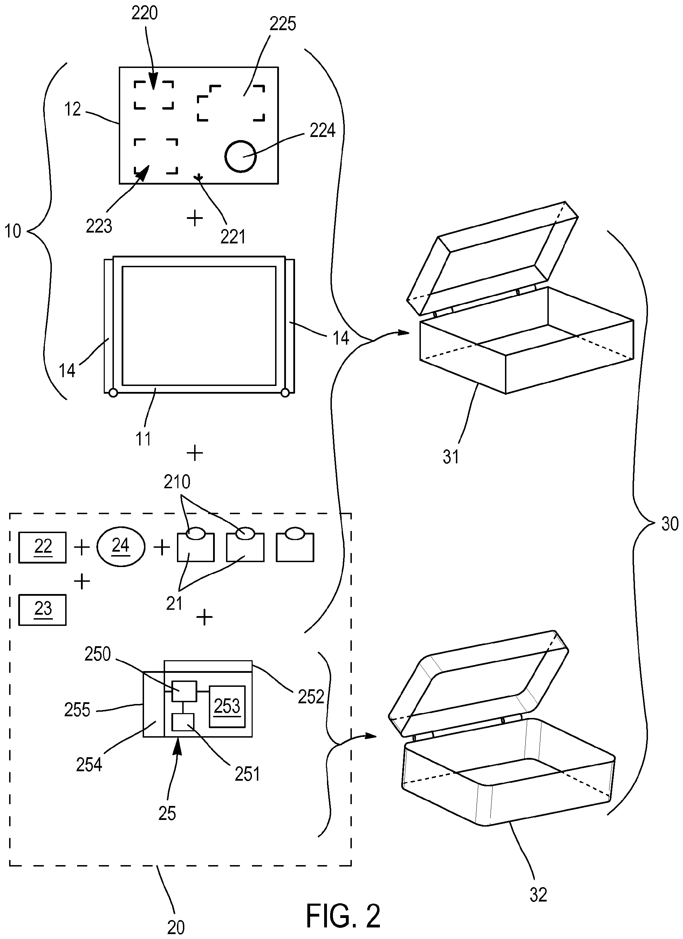

De retour à la figure 2, le système 1 de relevé de données photométriques comprend en outre un module électronique de mesure 20. Ce module comprend une pluralité de capteurs d'éclairement 21, avantageusement des luxmètres.

De préférence, le module 20 comprend au moins trois capteurs d'éclairement 21, et plus préférablement encore cinq capteurs d'éclairement 21.

De plus, le module électronique de mesure 20 comprend un système de géopositionnement 22, de préférence par satellite, c'est-à-dire de type GPS. Ce système de géopositionnement est autonome, c'est-à-dire indépendant du véhicule. De cette manière, il supprime la nécessité de connecter le système de relevé de données 1 à un odomètre intégré au véhicule.

Pour que les mesures d'éclairement puissent être corrélées aux mesures de position du véhicule lors d'une campagne de mesure, et que les mesures soient ainsi fiables et répétables, le châssis 10 comprend des emplacements dédiés pour les terminaisons sensibles des capteurs d'éclairement 21 et du système de géopositionnement 22.

A cet égard, le châssis 10 comporte une surface support 12, solidaire du cadre 11 ou pouvant être fixée sur celui-ci. La surface support 12 comprend un emplacement dédié 220 pour le système de géopositionnement 22. Cet emplacement peut être un marquage réalisé sur la surface. Alternativement, il peut s'agir d'un connecteur spécifique pouvant coopérer avec le système de géopositionnement, ce connecteur étant disposé en un point précis de la surface support. Le connecteur 220 permet alors la fixation amovible du système de géopositionnement pour pouvoir ensuite stocker séparément les composants du module électronique 20 du châssis 10.

En variante, l'emplacement 220 peut encore être un logement formé par un renfoncement dans la surface support, et dont la forme est complémentaire à celle du système de géopositionnement 22.

De ce fait, lors du montage du système de géopositionnement 22 sur la surface support 12, l'emplacement dédié 220 garantit que le système de géopositionnement est toujours positionné au même endroit.

Concernant les capteurs d'éclairement 21, ceux-ci ont également un emplacement dédié par rapport au châssis 10. Pour cela, le châssis comporte au moins un support de capteur 14. Chaque capteur 21 comprend une terminaison sensible 210, c'est-à-dire la partie recevant effectivement l'éclairement à mesurer, et une électronique de traitement (non représentée). Dans ce cas, c'est la terminaison sensible 210 de chaque capteur qui doit être disposée à un emplacement déterminé, le support 14 pouvant alors recevoir la terminaison sensible 210 d'au moins un capteur 21.

Le support de capteur 14 prend avantageusement la forme d'un bras escamotable, fixé au cadre 11 du châssis 10. De préférence, comme représenté sur les figures, le châssis 10 comprend deux bras escamotables 14.

Les bras 14 peuvent être déployés en une position dans laquelle ils s'étendent en saillie par rapport au cadre 11 du châssis. En position escamotée, les bras 14 peuvent être rabattus contre un côté du cadre 11. Les bras peuvent être escamotés au moyen d'un pivot d'axe orthogonal au plan du cadre, disposé au niveau d'un coin du cadre, ou alternativement peuvent être rentrés à l'intérieur du cadre si celui-ci comprend un logement adapté à cet effet.

Ainsi lorsque le cadre 11 présente une forme rectangulaire ou carré, les deux bras escamotables 14 s'étendent, en position déployée, dans le prolongement d'un bord latéral 110 du cadre, et en position déployée, sont rabattus contre un bord latéral adjacent 111.

Les bras 14 sont avantageusement de même longueur.

Chaque bras 14 présente à son extrémité au moins un emplacement 140 de réception de la terminaison sensible 210 d'un capteur 21. L'emplacement 140 peut être un logement ou un moyen de fixation de la terminaison sensible. De plus, chaque bras comprend de préférence une rainure ou un canal interne 141 s'étendant de l'extrémité du bras au cadre 11. La rainure 141 ou le canal interne est adapté(e) pour recevoir un câble de connexion 212 s'étendant entre la terminaison sensible 210 et l'électronique de traitement du capteur.

Cette configuration permet de déporter au moins deux capteurs d'éclairement 21 de part et d'autre du châssis 10. En outre au moins un troisième capteur d'éclairement 21 est avantageusement fixé sur le cadre 11 ou sur la surface support 12 du châssis, à égale distance des extrémités des bras 14 en position déployée, comme représenté schématiquement sur la figure 1. Ce capteur 21 a aussi un emplacement dédié 221 sur le châssis, matérialisé de manière analogue à l'emplacement 220 du système de géopositionnement.

Ainsi le système 1 de relevé de données photométriques permet de respecter les préconisations de la norme EN13201-2 en réalisant simultanément, lorsque le véhicule se trouve en un point donné d'une chaussée, trois mesures dont l'une est au milieu de la voie, et les deux autres sont déportées latéralement de part et d'autre de la première.

En variante, le système 1 peut en outre comprendre deux capteurs d'éclairement 21 supplémentaires. Dans ce cas ces capteurs supplémentaires sont disposés respectivement aux extrémités des bras 14, côte à côte avec les deux autres capteurs disposés à cet emplacement. Ces capteurs additionnels présentent une sensibilité différente des autres capteurs et permettent de compléter la mesure.

La géométrie du châssis 10 comprenant un cadre 11 portant le système de fixation 13 au véhicule, et des bras 14 en saillie pour porter les capteurs 21, permet de réduire la largeur du cadre 11, et donc de réduire la largeur du système de fixation 13 au véhicule.

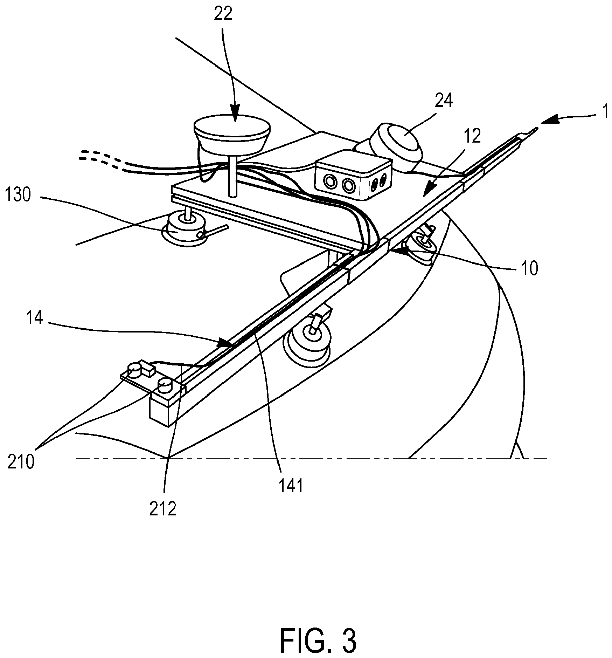

De ce fait, il est possible de fixer le système 1 de relevé de données non seulement sur des voitures, comme sur la figure 3, mais aussi sur des véhicules moins larges, en particulier quads ou vélos triporteurs. Ces derniers sont particulièrement avantageux car ils peuvent également circuler sur des voies piétonnes ou des pistes cyclables qui sont interdites aux autres types de véhicule.

En outre, le caractère escamotable des bras support 14 permet de limiter l'encombrement du châssis 10, et notamment de le transporter aisément pour le déployer en différents endroits en fonction des besoins et/ou des disponibilités des véhicules.

Le module électronique de traitement 20 du système de relevé de données 1 comprend avantageusement des capteurs supplémentaires. En particulier, il peut comprendre un chromamètre 23, c'est-à-dire un capteur permettant de mesurer la chromaticité d'une source lumineuse, typiquement de l'éclairage urbain.

La terminaison sensible de ce chromamètre 23 bénéficie également d'un emplacement dédié 223 sur la surface support 12 du châssis, permettant sa fixation amovible toujours au même endroit. Ainsi, les positions relatives des terminaisons sensibles du chromamètre 23, des luxmètres 21 et du système de géopositionnement 22 sont connues.

Comme précédemment, l'emplacement dédié du chromamètre peut être matérialisé par un marquage, un logement ou renfoncement dans la surface support permettant de positionner la terminaison sensible du chromamètre, un connecteur dédié, etc.

Le module électronique de mesure 20 peut enfin comprendre une caméra 24, dont le capteur peut également être fixé de façon amovible à un emplacement dédié 224 de la surface support du châssis 12, de manière analogue à la description qui précède pour le chromamètre ou le système 22 de géopositionnement.

La caméra peut prendre une acquisition vidéo en continu. Ceci permet de corréler les données des capteurs avec des informations visuelles pour permet de lever un doute éventuel sur un emplacement des mesures ou sur une modification d'environnement pendant les mesures.

Enfin, le module électronique de mesure 20 du système de relevé de données comprend en outre une unité de traitement 25. Cette unité de traitement comprend de préférence des moyens de traitement 250, par exemple un processeur, une mémoire 251, et une source d'énergie 252, typiquement une batterie. La batterie peut alimenter tout ou partie des composants du module électronique de mesure 20 - avantageusement ceux qui ne sont pas équipés eux-mêmes d'une source d'énergie intégrée.

L'unité de traitement 25 peut de manière optionnelle comprendre également une interface Homme-Machine 253, par exemple un écran tactile ou un écran et un clavier.

L'unité de traitement 25 peut par exemple être un PC industriel, une tablette tactile ou un ordinateur portable réunissant ces fonctions.

L'unité de traitement 25 comprend en outre une interface de connexion 254 avec les terminaisons sensibles des différents capteurs et systèmes de mesure disposés sur le châssis du module électronique de mesure 20.

L'interface de connexion 254 peut comprendre un port USB relié à un matériel d'acquisition de données (DAQ) produit par la société National Instruments. Les capteurs sont eux-mêmes reliés à ce matériel d'acquisition de données par un toron 255 de câbles adaptés.

Avantageusement, l'interface de connexion 254 peut être adaptée pour communiquer avec d'autres types de capteurs que ceux déjà décrits, pour compléter si besoin les fonctionnalités du système 1 de relevé de données. Ces capteurs peuvent par exemple être du type thermomètre, capteur d'humidité, capteur de composition de l'air ou de pollution, capteur optique comme un appareil photographique, etc.

Le processeur 250 est configuré pour exécuter des instructions de code permettant de commander l'acquisition synchronisée de données par les différents capteurs, et de réunir les données relevées. Le processeur peut en outre traiter ces données pour les convertir en un format différent, les stocker dans la mémoire 252, etc.

En référence à la figure 2, le système 1 comprend en outre un système de stockage 30 comprenant deux valises 31, 32 adaptées pour recevoir :
- Dans une première valise 31, le châssis 10, les bras 14 se trouvant alors en position escamotée, et les terminaisons sensibles des capteurs, et,
- Dans une seconde valise 32, l'unité de traitement 25.

Avantageusement, l'unité de traitement 25 est toujours conservée stockée dans la valise 32. Elle peut ainsi être transportée et utilisée facilement. La valise 32 peut ainsi être positionnée dans la voiture et ouverte pour permettre l'accès à l'unité de traitement et la connexion des différents câbles, tandis que le châssis est déployé sur le capot de la voiture.

L'autre valise 32 permet de stocker et de transporter le châssis 10 ainsi que les capteurs du module électronique de commande, c'est-à-dire tous les éléments décrits ci-avant et qui doivent être montés sur le châssis pour l'acquisition des données photométriques. Ces capteurs peuvent rester en position sur le châssis 10 pendant le stockage et le transport.

Alternativement, ces capteurs peuvent être montés de manière amovible au châssis 10 et détachés pour leur stockage, pour permettre un stockage ergonomique de l'ensemble du système 1 de relevé de données.

Dans ce cas, comme les emplacements des composants du module 20 sont prévus sur le châssis, il est ainsi aisé de déployer le système 1 pour différentes missions.

En variante, les capteurs sont maintenus en place sur le châssis 10 lors de son stockage dans la valise 31, ce qui évite la nécessité de les déplacer et garantit une bonne répétabilité des mesures et un temps d'installation optimisé sur le véhicule.

Le déploiement du système 1 est réalisant en montant le châssis 10 sur un véhicule, en dépliant les bras 14, puis, le cas échéant en positionnant chacun des composants du module électronique de mesure à son emplacement dédié. En particulier, les luxmètres (ou seulement les terminaisons sensibles) sont positionnés aux extrémités des bras, avec la terminaison sensible orientée vers le haut par rapport à un plan horizontal, pour pouvoir mesurer l'éclairement en lux résultant de l'éclairage public, c'est-à-dire l'éclairement direct de l'éclairage, et non la luminance en cd/m², correspondant à la partie réfléchie par la chaussée.

L'autre valise 31 comportant l'unité de traitement est positionnée dans la voiture, et ouverte pour connecter l'unité de traitement aux capteurs disposés sur le châssis.

Puis le véhicule est mis en circulation sur une chaussée dans laquelle on souhaite relever l'éclairement, et les capteurs sont pilotés par l'unité de traitement pour acquérir des mesures à une fréquence déterminée pour pouvoir ensuite exploiter ces données et établir des cartographies du niveau d'éclairement dans un lieu public.

## Revendications

1. Système (1) de relevé de données photométriques, comprenant :
- un châssis (10) adapté pour être monté de façon amovible sur un véhicule, et
- un module électronique de mesure (20), comprenant un ensemble de capteurs, ledit ensemble comportant des capteurs d'éclairement (21),
le module électronique de mesure (20) comprenant en outre un système de géopositionnement (22), et le châssis (10) comportant des emplacements dédiés (220, 140) pour la fixation du système de géopositionnement (22) et des capteurs, de sorte que les positions relatives des capteurs et du système de géopositionnement soient déterminées,
**caractérisé en ce que** le châssis (10) comporte un cadre (11), comprenant au moins un système (13) de fixation amovible au véhicule, et au moins deux bras de support (14) de capteur escamotables, lesdits au moins deux bras de support (14) pouvant adopter une position déployée dans laquelle ils s'étendent en saillie du cadre (11), et étant escamotables à partir de ladite position déployée, chaque bras de support (14) Présentant à son extrémité au moins un emplacement (140) de réception d'une terminaison sensible (210) d'un capteur d'éclairement (21) permettant de déporter au moins deux capteurs d'éclairement (21) de part et d'autre du châssis (10).

2. Système (1) de relevé de données selon la revendication 1, dans lequel le cadre (11) du châssis (10) présente une forme rectangulaire, et chaque bras (14) s'étend, en position déployée, dans le prolongement d'un premier bord latéral (110) du cadre, et, en position escamotée, le long d'un bord latéral (111) adjacent au premier bord.

3. Système (1) de relevé de données selon la revendication 2, dans lequel les capteurs d'éclairement (21) comprennent au moins trois luxmètres, chaque luxmètre comprenant une terminaison sensible (210), chaque emplacement (140) de réception d'une terminaison sensible (210) à l'extrémité de chaque bras de support (14) adapté pour recevoir la terminaison sensible (210) d'un luxmètre, le troisième luxmètre étant rapporté sur le châssis, à égale distance des extrémités des bras (14).

4. Système (1) de relevé de données selon l'une des revendications précédentes, dans lequel le module électronique de mesure (20) comporte en outre une unité de traitement (25) comprenant :
- un processeur (250),
- une source d'énergie (252),
- une interface de communication avec des capteurs (254), et
- une interface homme-machine (253).

5. Système (1) de relevé de données selon la revendication 4 en combinaison avec la revendication 3, dans lequel chaque bras de support (14) comprend en outre au moins une rainure (141) adaptée pour recevoir un câble de connexion (212), la rainure s'étendant de l'extrémité du bras au cadre (10) pour relier la terminaison sensible d'un capteur (210) à l'unité de traitement (25).

6. Système (1) de relevé de données selon l'une des revendications 4 ou 5, dans lequel l'interface de communication (254) avec des capteurs est adaptée pour communiquer avec au moins un capteur parmi le groupe suivant :
- capteur d'humidité,
- thermomètre,
- capteur de composition de l'air,
- capteur optique.

7. Système (1) de relevé de données selon l'une des revendications précédentes, dans lequel le module électronique de mesure (20) comprend en outre une caméra (24).

8. Système de relevé de données selon l'une des revendications précédentes en combinaison avec la revendication 4, comprenant en outre un système de stockage (30) comprenant une valise adaptée pour recevoir l'unité de traitement (25), et une valise adaptée pour recevoir le châssis (10) et les capteurs du module électronique de mesure (20).

## Patentansprüche

1. System (1) zur Erhebung von fotometrischen Daten, umfassend:
- ein Gestell (10), das zur lösbaren Befestigung auf einem Fahrzeug geeignet ist, und
- ein elektronisches Messmodul (20), das eine Anordnung von Sensoren umfasst, wobei die Anordnung Beleuchtungssensoren (21) aufweist,
wobei das elektronische Messmodul (20) ferner ein Geopositionierungssystem (22) umfasst und das Gestell (10) spezielle Stellen (220, 140) für die Befestigung des Geopositionierungssystems (22) und der Sensoren aufweist, so dass die relativen Positionen der Sensoren und des Geopositionierungssystems bestimmt sind,
**dadurch gekennzeichnet, dass** das Gestell (10) einen Rahmen (11) aufweist, der mindestens ein System (13) zur lösbaren Befestigung am Fahrzeug umfasst und mindestens zwei einziehbare Sensorstützarme (14), wobei die mindestens zwei Stützarme (14) eine ausgefahrene Position einnehmen können, in der sie sich über den Rahmen (11) hinaus erstrecken und aus der ausgefahrenen Position einziehbar sind, wobei jeder Stützarm (14) an seinem Ende mindestens eine Stelle (140) zur Aufnahme eines sensiblen Endes (210) eines Beleuchtungssensors (21) aufweist, die erlaubt, mindestens zwei Beleuchtungssensoren (21) auf der einen und der anderen Seite des Gestells (10) zu versetzen.

2. System (1) zur Erhebung von Daten nach Anspruch 1, wobei der Rahmen (11) des Gestells (10) eine rechteckige Form aufweist und sich jeder Arm (14) in ausgefahrener Position in der Verlängerung eines ersten Seitenrands (110) des Rahmens und in eingefahrener Position entlang eines dem ersten Rand benachbarten Seitenrands (111) erstreckt.

3. System (1) zur Erhebung von Daten nach Anspruch 2, wobei die Beleuchtungssensoren (21) mindestens drei Luxmeter umfassen, wobei jedes Luxmeter ein sensibles Ende (210) umfasst, wobei jede Stelle (140) zur Aufnahme eines sensiblen Endes (210) am Ende jedes Stützarms (14) zur Aufnahme des sensiblen Endes (210) eines Luxmeters geeignet ist, wobei das dritte Luxmeter auf dem Gestell in gleichem Abstand von den Enden der Arme (14) angebracht ist.

4. System (1) zur Erhebung von Daten nach einem der vorangehenden Ansprüche, wobei das elektronische Messmodul (20) ferner eine Verarbeitungseinheit (25) aufweist, umfassend:
- einen Prozessor (250),
- eine Energiequelle (252),
- eine Kommunikationsschnittstelle mit Sensoren (254), und
- eine Mensch-Maschinen-Schnittstelle (253).

5. System (1) zur Erhebung von Daten nach Anspruch 4 in Kombination mit Anspruch 3, wobei jeder Stützarm (14) ferner mindestens eine Rille (141) umfasst, die zur Aufnahme eines Verbindungskabels (212) geeignet ist, wobei sich die Rille vom Ende des Arms zum Rahmen (10) erstreckt, um das sensible Ende eines Sensors (210) mit der Verarbeitungseinheit (25) zu verbinden.

6. System (1) zur Erhebung von Daten nach einem der Ansprüche 4 oder 5, wobei die Kommunikationsschnittstelle (254) mit Sensoren zur Kommunikation mit mindestens einem Sensor aus der folgenden Gruppe geeignet ist:
- Feuchtigkeitssensor,
- Thermometer,
- Luftzusammensetzungssensor,
- optischer Sensor.

7. System (1) zur Erhebung von Daten nach einem der vorangehenden Ansprüche, wobei das elektronische Messmodul (20) ferner eine Kamera (24) umfasst.

8. System zur Erhebung von Daten nach einem der vorangehenden Ansprüche in Kombination mit Anspruch 4, umfassend ferner ein Lagersystem (30), das einen Koffer umfasst, der zur Aufnahme der Verarbeitungseinheit (25) geeignet ist, und einen Koffer, der zur Aufnahme des Gestells (10) und der Sensoren des elektronischen Messmoduls (20) geeignet ist.

## Claims

1. System (1) for recording photometric data, comprising :
- a chassis (10) adapted to be removably mounted on a vehicle, and
- an electronic measurement module (20), comprising a set of sensors, said set including illumination sensors (21),
the electronic measurement module (20) further comprising a geopositioning system (22), and the chassis (10) having dedicated locations (220, 140) for fixing the geopositioning system (22) and the sensors, so that the relative positions of the sensors and the geopositioning system are determined,
**characterised in that** the chassis (10) comprises a frame (11), comprising at least one system (13) for removable attachment to the vehicle, and at least two retractable sensor support arms (14), said at least two support arms (14) being adapted to adopt a deployed position in which they extend beyond the frame (11), and being retractable from said deployed position, each support arm (14) having at its end at least one location (140) for receiving a sensitive termination (210) of an illumination sensor (21) enabling at least two illumination sensors (21) to be offset on either side of the frame (10).

2. The data collection system (1) according to claim 1, wherein the frame (11) of the chassis (10) has a rectangular shape, and each arm (14) extends, in the deployed position, in the extension of a first lateral edge (110) of the frame, and, in the retracted position, along a lateral edge (111) adjacent to the first edge.

3. Data acquisition system (1) according to claim 2, in which the illumination sensors (21) comprise at least three luxmeters, each luxmeter comprising a sensitive termination (210), each location (140à) for receiving a sensitive termination (210) at the end of each support arm (14) adapted to receive the sensitive termination (210) of a luxmeter, the third luxmeter being attached to the chassis, at an equal distance from the ends of the arms (14).

4. A data acquisition system (1) according to one of the preceding claims, wherein the electronic measurement module (20) further comprises a processing unit (25) comprising :
- a processor (250),
- an energy source (252),
- a communication interface with sensors (254), and
- a human-machine interface (253).

5. The data acquisition system (1) of claim 4 in combination with claim 3, wherein each support arm (14) further comprises at least one groove (141) adapted to receive a connection cable (212), the groove extending from the end of the arm to the frame (10) to connect the sensitive termination of a sensor (210) to the processing unit (25).

6. A data logging system (1) according to any of claims 4 or 5, wherein the sensor communication interface (254) is adapted to communicate with at least one sensor from the following group:
- humidity sensor,
- thermometer,
- air composition sensor,
- optical sensor.

7. A data acquisition system (1) according to any of the preceding claims, wherein the electronic measurement module (20) further comprises a camera (24).

8. A data acquisition system according to one of the preceding claims in combination with claim 4, further comprising a storage system (30) comprising a case adapted to receive the processing unit (25), and a case adapted to receive the chassis (10) and the sensors of the electronic measurement module (20).
